Europäisches Patentamt

European Patent Office

Office européen des brevets

(11) Numéro de publication: **0 061 972**
**A1**

(19)

(12) # DEMANDE DE BREVET EUROPEEN

(21) Numéro de dépôt: 82400561.5

(22) Date de dépôt: 26.03.82

(51) Int. Cl.³: **B 29 D 27/02**
**B 29 D 27/04, A 47 C 7/38**

(30) Priorité: 27.03.81 FR 8106162

(43) Date de publication de la demande:
06.10.82 Bulletin 82/40

(84) Etats contractants désignés:
DE FR GB IT

(71) Demandeur: Etablissements TREVES
109 rue du Faubourg Saint-Honoré
F-75008 Paris(FR)

(72) Inventeur: Fermigier, Claude
5, rue de l'Université
F-75007 Paris(FR)

(72) Inventeur: Fleury, Armand
9, avenue du Bel-air
F-91800 Brunoy (Essonne)(FR)

(74) Mandataire: Bloch, Robert et al,
39 avenue de Friedland
F-75008 Paris(FR)

(54) Perfectionnements aux têtes d'injection de polyuréthane et aux procédés d'injection dans une enveloppe creuse, notamment d'un appui-tête.

(57) Tête d'injection de polyuréthane comprenant un alésage (11) qui communique avec une chambre de mélange (17) et dont la sortie coopère étroitement avec les bords d'un orifice (23) prévu dans une enveloppe creuse. A la fin de la coulée du polyuréthane dans l'enveloppe, un piston de nettoyage (12) descend dans l'alésage (11) en poussant une plaquette (19) dont la périphérie comporte des lèvres souples qui raclent les parois de l'alésage pour les nettoyer. A la fin de la descente, le piston enfonce la plaquette, par forçage, dans l'orifice (23) de l'enveloppe, pour l'obturer. Les lèvres servent alors à maintenir la plaquette (19) fermement en place dans l'orifice (23).

FIG.3

"Perfectionnements aux têtes d'injection de polyuréthane
et aux procédés d'injection dans une enveloppe creuse,
notamment d'un appui-tête."

La présente invention concerne des perfectionnements apportés
aux procédés d'injection haute pression de polyuréthane  dans
une enveloppe creuse par un orifice prévu dans ladite enveloppe.

On connaît des injecteurs de polyuréthane permettant de mettre
en oeuvre ce procédé. Le fonctionnement de ces injecteurs comprend généralement deux phases. La première phase est une phase de coulée, pendant laquelle au moins deux constituants du
polyuréthane, un polyol et un isocyanate, sont amenés sous
haute pression dans une chambre de mélange puis, sous l'effet
de la pression, ce mélange s'écoule à travers un alésage vers
une sortie, coïncidant éventuellement avec l'orifice d'une
enveloppe à remplir. La seconde phase est une phase de recyclage et de nettoyage, pendant laquelle des pistons et/ou des
coulisseaux agissent d'une part pour mettre en boucle sur lui-
même chacun des deux circuits d'amenée des composants, et
d'autre part pour racler les parois de l'alésage et de la
chambre de mélange, ceci afin de les nettoyer.

Cependant pour que ce nettoyage soit réellement efficace, il
faut que l'usinage des pistons et des alésages soit exécuté
avec des tolérances très faibles, ce qui rend ces injecteurs
très coûteux. De plus, lorsque après injection, on veut obturer l'orifice de l'enveloppe, cette obturation ne peut se faire qu'en une opération distincte du processus d'injection, ce
qui bien évidemment augmente la durée globale du traitement,
au détriment du rendement, notamment lorsque l'injection fait
partie d'un cycle de fabrication.

On connaît aussi dans le cadre du remplissage avec du polyuréthane d'un appui-tête pour automobile, du type comportant une
partie en forme de cloche s'ouvrant sur l'extérieur, et destinée à recevoir un mécanisme de réglage en hauteur, ainsi qu'un habillage, fixé hermétiquement à la cloche du côté de son ouverture, et entourant celle-ci de façon à définir une enveloppe close, un procédé de coulage de polyuréthane dans lequel on prévoit le long de la paroi de la cloche, à l'intérieur de l'habillage, une cheminée, fixée à la cloche de façon définitive et servant à acheminer le polyuréthane de l'extérieur vers l'intérieur de l'enveloppe dans la région du fond de la cloche.

Cependant, la présence de cette cheminée, rigide et protubérante, nuit notablement au confort, et tout le polyuréthane que cette cheminée contient encore après le coulage est perdu.

La présente invention vise à pallier ces inconvénients, et à mettre en oeuvre un procédé d'injection de polyuréthane qui puisse être exécuté grâce à un injecteur de tolérances plus grossières, donc moins coûteux et dans lequel l'obturation de l'orifice d'injection puisse être exécutée en même temps que la phase de nettoyage et de recyclage du processus d'injection.

Un autre but de l'invention est de permettre le coulage du polyuréthane dans l'enveloppe d'un appui-tête, sans le besoin d'une cheminée auxiliaire, mais en effectuant la coulée directement à travers un orifice prévu dans la paroi de la cloche.

A cet effet, la présente invention concerne un procédé d'injection de polyuréthane du type défini plus haut, qui utilise une tête d'injection comprenant en outre des moyens pour amener sous ledit piston, avant l'étape d'évacuation, un organe de raclage des parois de l'alésage lorsque le piston coulisse vers la sortie de l'alésage, cet organe de raclage étant constitué par une plaquette dont les dimensions sont sensiblement égales aux dimensions de la section de l'alésage et de l'orifice, et comportant une ou plusieurs lèvres souples s'étendant continûment sur son périmètre.

Ainsi, les lèvres, coopérant étroitement avec les parois de l'alésage lors de la descente du piston, assurent un raclage, et donc un nettoyage, efficace, ce qui permet un usinage du piston et de l'alésage avec des tolérances moins contraignantes, le piston ne jouant alors plus le rôle de racleur. L'évacuation du polyuréthane restant dans l'alésage après la coulée est évacué dans sa totalité.

La plaquette peut être par exemple en matière plastique, auquel cas il est commode que la lèvre soit constituée de barbes ou bavures résultant de son moulage lorsque la plaquette est moulée. Ces barbes peuvent éventuellement être égalisées. La plaquette peut être amenée sous le piston par une fente prévue dans la tête d'injection à cet effet, et disposée de préférence transversalement à la direction de l'alésage, cet acheminement pouvant être effectué par tout moyen connu.

L'obturation peut se faire par exemple en enfonçant la plaquette dans l'orifice par forçage, avec l'aide du piston. Les lèvres servent alors à maintenir la plaquette en place.

La présente invention concerne aussi une tête d'injecteur permettant de mettre en oeuvre le procédé décrit ci-dessus.

De façon avantageuse, le polyuréthane, lors de la coulée décrit une trajectoire en "L", ceci afin que la turbulence et la vitesse de la coulée soient réduites pour ne pas risquer d'endommager la partie de l'habillage située dans l'axe de l'orifice, et relativement proche, dans le cas du remplissage d'un appui-tête.

La présente invention concerne aussi un appui-tête ayant une structure conforme à la mise en oeuvre du procédé selon la présente invention.

L'invention sera mieux comprise à la lecture de la description suivante d'une mise en oeuvre préférée du procédé selon l'invention, ainsi que d'une forme de réalisation préférée de l'injecteur de polyuréthane permettant d'exécuter le procédé ainsi que d'un exemple de produit obtenu par le procédé, faite en référence aux dessins annexés, sur lesquels :

- la figure 1 représente une vue schématique en perspective de la tête d'injecteur et de l'élément à remplir ;
- la figure 2 représente une vue en coupe de la tête d'injecteur et de l'élément au cours de la phase de coulée ;
- la figure 3 représente une vue en coupe de l'ensemble représenté à la figure 2, mais au cours de la phase de nettoyage ;
- la figure 4 représente une vue en coupe d'une partie de l'ensemble de la figure 3 après l'étape d'obturation,
- la figure 5 représente une vue en coupe d'un produit obtenu par le procédé selon l'invention, et
- la figure 6 représente une vue en coupe, agrandie, d'une partie commune aux figures 3, 4 et 5.

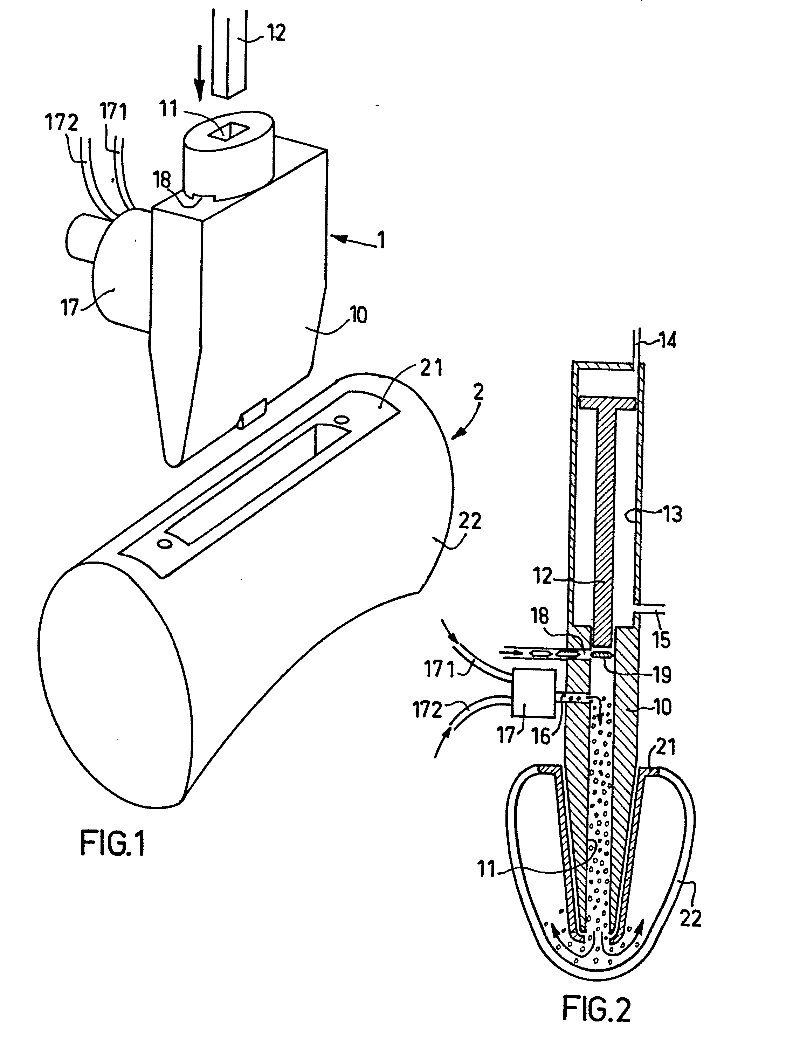

L'ensemble représenté à la figure 1 comporte une tête d'injecteur, indiquée globalement par le repère 1, un élément destiné à être rempli de polyuréthane indiqué globalement, par le repère 2. L'élément représenté est une enveloppe d'appui-tête pour automobile. L'élément 2 comporte une cloche 21 en matière plastique rigide s'étendant vers l'intérieur de l'enveloppe et sur laquelle est fixé de façon hermétique un habillage 22 en tissu, simili-cuir, mousse ou autre. L'extrémité inférieure de la tête 1 est conformée de façon à coopérer étroitement avec les parois intérieures de la cloche 21.

Cette coopération est mieux représentée sur la figure 2.

Sur cette figure 2, le corps 10 de la tête 1 comporte un alésage 11, de section carrée, dont la sortie est destinée à venir faire face, lorsque l'ensemble est en place, à un orifice 23 prévu dans le fond de la cloche 21, et de section également carrée et de dimensions approximativement égales à celles de la section de l'alésage 11. La tête d'injecteur comprend également un piston 12, mû par un circuit hydraulique et pouvant coulisser dans l'alésage d'un point bas, adjacent à l'orifice 23, à un point haut. Le circuit hydraulique comporte une chambre 13 et deux orifices 14 et 15, la différence de pression de liquide hydraulique entre ces deux orifices déterminant le sens du mouvement du piston 12, ainsi que sa vitesse.

La tête 10 comporte en outre un conduit 16 communiquant d'un côté avec l'alésage 11, et de l'autre avec la chambre de mélange d'une tête de mélange 17, non représentée en détail, car connue.

Indiquons cependant que cette tête de mélange comporte deux conduits d'arrivée sous haute pression 171, 172, l'un pour le polyol, et l'autre pour l'isocyanate qui, mélangés, forment la mousse de polyuréthane. De façon connue, elle comporte aussi un piston de nettoyage de la chambre de mélange, agencé d'une part pour boucler sur eux-mêmes, lors de la phase de nettoyage, chacun des deux circuits haute pression, à des fins de recyclage, et d'autre part pour racler les parois de la chambre.

De plus la tête d'injecteur comporte une fente 18 située dans un plan perpendiculaire à la direction de l'alésage, et dont la largeur est au moins égale au côté de la section carrée, ronde ou autre de l'alésage 11.

L'utilité de cette fente sera expliquée plus loin, lors de la description de la mise en oeuvre du procédé.

Par ailleurs, la position haute du piston 12 est déterminée de telle façon que celle-ci n'obture pas le conduit 16 d'arrivée du mélange.

Le déroulement du procédé selon l'invention est le suivant. Comme on l'a dit, le procédé consiste essentiellement en deux phases. La première phase est la phase de coulée. Le piston 12 est alors en position haute et obture la partie supérieure de l'alésage 11.

Les deux composés du mélange, un polyol et un isocyanate, sont amenés sous haute pression par leurs conduits respectifs
171, 172 dans la chambre de mélange de la tête de mélange 17.
Il est préférable que les deux composants soient injectés,
de façon connue, l'un contre l'autre, ceci afin d'obtenir un
mélange plus homogène.

Sous l'effet de cette pression, le mélange obtenu s'écoule à
travers l'orifice 16 alors non obturé par le piston 12, puis
dans l'alésage 11 vers l'orifice 23 de la cloche 21. De là,
il pénètre dans l'enveloppe de l'élément 2, définie par la
cloche 21 et l'habillage hermétique 22. C'est cette phase du
procédé qui est illustrée par la figure 2. On remarque sur cette figure que la trajectoire décrite par le polyuréthane est
en forme de "L". Ainsi on obtient un flux de coulée amorti et
donc une vitesse et une turbulence considérablement réduites
au profit de la précision des opérations.

On comprend bien qu'à des fins d'étanchéité, il faut que la
partie inférieure du corps 10 de la tête 1 coopère étroitement avec le fond de la cloche 21, plus particulièrement dans
la région de l'orifice 23. Cet orifice s'il est situé dans
le cas présent, approximativement au milieu de la cloche dans
sa longueur, il peut néammoins se trouver n'importe où à
l'intérieur de cette cloche, mais de préférence dans le fond.

Lorsqu'une quantité suffisante de polyuréthane a été injectée
dans l'élément, alors le piston de nettoyage et de recyclage
(non représenté), situé dans la chambre de mélange, est mis
en action.

Alors chacun des deux circuits haute pression est bouclé sur
lui-même et l'injection est interrompue. L'étape suivante consiste à placer sous le piston 12 avant sa descente ou avant
qu'il n'atteigne la fente 18, une plaquette en matière plastique 19, que l'on achemine en position transversale par rapport
à l'alésage, par tout moyen connu.

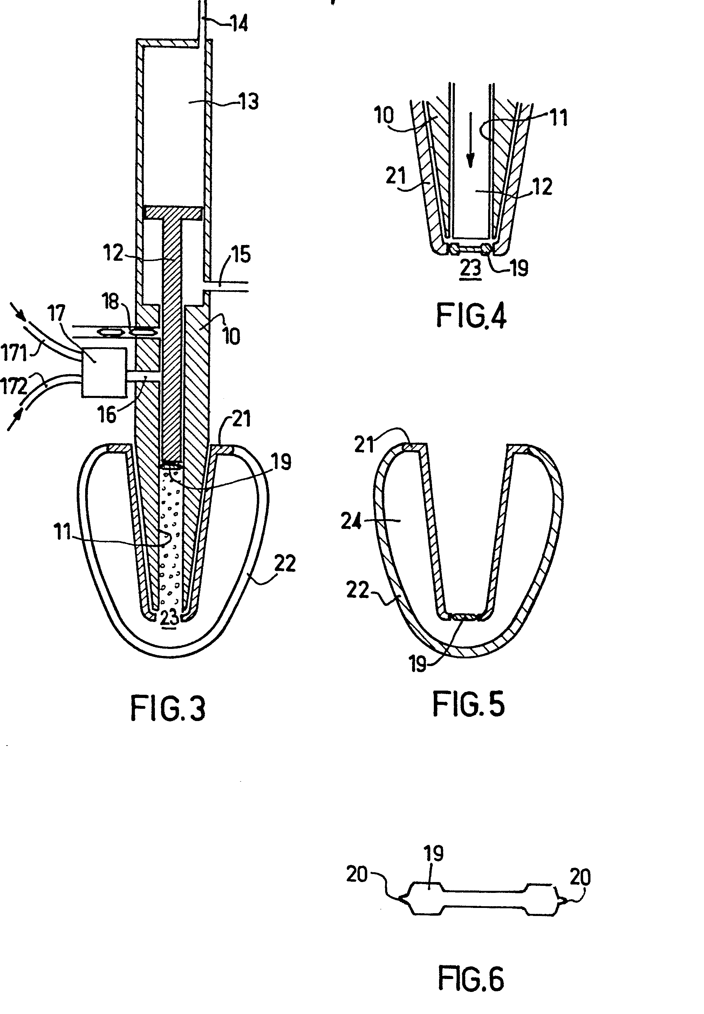

Cette plaquette 19 représentée sur la figure 6 comporte, répartie continûment sur chacun de ses côtés, une lèvre souple 20, on pourrait bien entendu prévoir plusieurs lèvres. La
dimension de la plaquette 19 est approximativement égale à
celle de la section de l'alésage 11 et du piston 12.

Le piston 12 descendant, il entraîne la plaquette 19 le long
de l'alésage. Cette étape du procédé selon l'invention est
représentée sur la figure 3.

A mesure que le piston 12 descend, les lèvres 20 de la plaquette 19 raclent les parois de l'alésage 11  et, en même temps,
le polyuréthane qui, après interruption de l'injection, était
resté dans l'alésage, est évacué vers l'orifice 23 de l'élément 2, pour y pénétrer.

Lorsque le piston 12 atteint son point bas (figure 4), alors
la plaquette 19 est poussée dans l'orifice 23 de l'élément 2
qui, comme on l'a dit, est de section approximativement égale
à celle de l'alésage 11. Les lèvres 20 servent alors à maintenir la plaque 19, qui joue alors le rôle d'un obturateur,
en place dans l'orifice 23. Puis le piston 12 remonte à son
point haut. Un nouveau cycle de remplissage peut commencer,
pour un autre élément à remplir.

On a indiqué plus haut que la plaquette 19 est acheminée sous
le piston 12 après la phase de coulée, au début de la phase
de nettoyage. Bien entendu, on peut concevoir de placer la
plaquette 19 sous le piston 12 avant la phase de coulée, ou
même pendant la phase de coulée, à condition bien évidemment
de maintenir l'alésage hermétiquement fermé dans sa partie
supérieure.

Comme on l'a dit, la plaquette 19 en matière plastique comporte des lèvres 20. Lorsque la plaquette 19 est obtenue, de façon connue, par moulage, elle comporte alors avant ébarbage,
des barbes ou bavures latérales. Il est alors particulièrement avantageux de ne pas les ébarber, et éventuellement de
les égaliser pour obtenir sans autre opération les lèvres 20.

Ces lèvres 20 sont assez souples pour, lors du raclage (figure 3), être en contact intime avec les parois de l'alésage 11, même si celles-ci présentent de légères aspérités.

Un autre avantage de l'utilisation de ces plaquettes dans leur fonction de raclage est que, puisque ce n'est plus le piston 12 lui-même aui assure l'évacuation et le nettoyage, son usinage, ainsi que celui de l'alésage 11 peuvent se faire avec une tolérance beaucoup moins faible que pour les injecteurs de type connu, dans lesquels c'est le piston lui-même qui doit assurer une bonne étanchéité avec l'alésage, pour une évacuation et un nettoyage réellement efficaces.

Une réduction sensible du coût de ces injecteurs est donc possible.

Enfin les pertes de début et de fin d'injection sont totalement éliminées, ceci grâce à la coopération étroite entre la tête 1 et la cloche 21, et à l'obturation finale.

L'appui-tête obtenu par le procédé selon l'invention, représenté à la figure 5 comporte une enveloppe hermétique constituée de la cloche 21, de l'habillage 22 et de la plaquette 19, maintenue en place grâce à ses lèvres 20  et, à l'intérieur de mousse de polyuréthane 24.

Bien entendu les formes de réalisation et de mise en oeuvre décrites ci-dessus ne sont pas restrictives, et tout procédé d'injection à deux phases de fonctionnement comportant une étape d'obturation faisant suite à une étape de raclage, par un élément auxiliaire, ne sort pas du cadre de l'invention. En particulier, les sections de l'alésage, du piston et de la plaquette peuvent être quelconques mais sensiblement identiques.

On peut notamment modifier les agencements et formes des divers éléments décrits sans s'éloigner de l'invention.

Enfin l'invention permet par exemple d'obtenir un appui-tête pour siège d'automobile dans lequel durant le remplissage, l'intérieur de la cloche 21 n'a subi aucune altération et en particulier aucune opération de nettoyage ou d'évacuation de polyuréthane excédentaire n'est nécessaire. Ceci est important car l'intérieur de cette cloche est destiné ultérieurement à contenir le dispositif de réglage de la hauteur de cet appui-tête par rapport au siège auquel il sera fixé. La présence d'éléments indésirables par suite de l'opération de coulage pourrait alors être gênante.

De plus l'invention résoud les problèmes posés par la présence d'une cheminée adjacente à la cloche.

Revendications

1.- Tête d'injection de polyuréthane du type comprenant un alésage communiquant avec la chambre de mélange et comportant une extrémité de sortie, un piston agencé pour coulisser dans ledit alésage et pour en évacuer le polyuréthane restant à la fin de la coulée et des moyens pour amener sous ledit piston, avant l'étape d'évacuation, un organe de raclage des parois de l'alésage lorsque le piston coulisse vers la sortie de l'alésage, caractérisée par le fait que ledit organe est une plaquette dont les dimensions sont égales ou légèrement supérieures aux dimensions de la section de l'alésage et qui comporte une ou plusieurs lèvres souples de raclage s'étendant continûment sur sa périphérie.

2.- Tête d'injection selon la revendication 1, dans laquelle les lèvres de la plaquette sont des barbes résultant du moulage de celle-ci.

3.- Tête d'injection selon l'une des revendications 1 et 2, dans laquelle la plaquette est acheminée vers l'alésage par une fente prévue à cet effet dans la paroi de l'alésage.

4.- Procédé d'injection haute pression de polyuréthane dans une enveloppe creuse par un orifice prévu dans ladite enveloppe, caractérisé par le fait qu'on utilise une tête d'injection selon l'une des revendications 1 à 3 et qu'on obture ledit orifice, après la coulée, par ledit organe de raclage.

5.- Appui-tête du type comprenant un élément en forme de cloche, un habillage imperméable en polyuréthane, fixé de façon hermétique à la cloche du côté de son ouverture et entourant celle-ci pour former une enveloppe close et de la mousse de polyuréthane dans l'enveloppe, caractérisé par le fait qu'il comporte sur la cloche un orifice obturé par une plaquette.

6.- Appui-tête selon la revendication 5, dans lequel la plaquette est maintenue fermement dans l'orifice au moyen d'au moins une lèvre souple s'étendant continûment sur sa périphérie.

7.- Application du procédé selon la revendication 4 à la fabrication d'un appui-tête selon l'une des revendications 5 ou 6.

FIG.1

FIG.2

FIG.3

FIG.4

FIG.5

FIG.6

## 0061972

Numéro de la demande

EP 82 40 0561

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | GB - A - 1 407 616 (VIKING ENGINEERING)<br><br>* figures 1,2; page 3, lignes 27-67 *<br><br>-- | 1,4 | B 29 D 27/02<br>27/04<br>A 47 C 7/38 |
| Y | US - A - 3 030 666 (ADAMS)<br><br>* brevet en entier *<br><br>-- | 1,4 | |
| A | FR - A - 2 330 527 (DEMAG)<br><br>* figure 1; pages 6,7 *<br><br>-- | 1 | |
| A | FR - A - 2 107 392 (ROTH)<br><br>* brevet en entier *<br><br>-------------- | 5,7 | **DOMAINES TECHNIQUES RECHERCHES (Int. Cl. ³)**<br><br>B 29 D 27/00<br>A 47 C 7/00<br>B 60 N 1/00<br>B 29 F 1/00 |

Le présent rapport de recherche a été établi pour toutes les revendications

| Lieu de la recherche | Date d'achèvement de la recherche | Examinateur |
|---|---|---|
| La Haye | 20-06-1982 | KUSARDY |